Europäisches Patentamt

European Patent Office

Office européen des brevets

(11) Publication number: **0 352 077**
**A1**

# EUROPEAN PATENT APPLICATION

(21) Application number: **89307283.5**

(22) Date of filing: **19.07.89**

(51) Int. Cl.⁵: **A 23 N 4/12**
**A 23 N 15/00**

(30) Priority: **19.07.88 GB 8817126**

(43) Date of publication of application:
**24.01.90 Bulletin 90/04**

(84) Designated Contracting States:
**AT BE CH DE ES FR GB GR IT LI LU NL SE**

(71) Applicant: **Ellis, Anthony George**
**Hamilton House Hamilton Street**
**Grimsby South Humberside DN32 7RE (GB)**

(72) Inventor: **Ellis, Anthony George**
**Hamilton House Hamilton Street**
**Grimsby South Humberside DN32 7RE (GB)**

(74) Representative: **Harrison, Ivor Stanley et al**
**Withers & Rogers 4 Dyer's Building Holborn**
**London EC1N 2JT (GB)**

(54) **Apparatus for core removal.**

(57) Apparatus for the removal of the core from an item of produce, in particular a cauliflower, comprises a support (26) whereby the item is held over an aperture on a conveyor (13) and a blade (21, 22) moves in an arcuate path from below, whereby the core is cut away and falls through the aperture. The blade (21, 22) may be in two scoop-like segments which pivot from either side of the aperture so that the cutting edges, which are obliquely formed, meet at the closed position.

FIG 2 (a)

**Description**

## APPARATUS FOR CORE REMOVAL

This invention relates to the removal of cores from items of produce such as vegetables.

Apparatus for core removal is known and such apparatus generally functions by bringing a cutting or chopping blade into contact with an item of produce supported on a table or other work surface. However, such apparatus tends to damage or fragment the edible portion of the produce and in any event tends to be relatively imprecise in action, with resulting wastage of the edible portion. Furthermore, the sharp edge of the blade is generally exposed in such apparatus.

It is an object of the present invention to provide apparatus for core removal which excises the core cleanly and accurately.

According to the invention, apparatus for removal of the core from an item of produce comprises a support surface for the produce and at least one core removal blade, the support surface including means for holding the produce in position such that the core is exposed to the blade, the blade being movable from a retracted position such that portions of the cutting edge thereof define a curved path to cut and separate the core from the produce.

Preferably the support surface includes an aperture over which the produce is held with its core generally at the bottom and the core removal blade moves in a curved, preferably arcuate, path, such that at the completion of the cutting stroke the core falls away under gravity and the aperture is closed by the blade to prevent edible portions of the produce from dropping through the aperture. The blade may be scoop-like and is preferably formed in two or more segments which are pivotally mounted towards the edge of the aperture for movement between an open position for receiving produce and a closed position at which the cutting edges of the blade segments are adjacent and abut or overlap at the completion of the cutting stroke. In a particularly preferred embodiment, the blade is constituted by two segments each substantially semi-circular in cross section and having a cutting edge formed obliquely, for example along a plane which cuts the blade at an inwardly-sloping angle, whereby each blade pivots inwardly during the cutting stroke from an upright retracted position to an angled position at which the cutting edges are adjacent.

When the produce is exposed to the blade with the latter in the retracted position, the produce may be in contact with the blade, partially impaled thereon, or out of contact therewith.

Apparatus according to the invention is preferably mounted on a conveyor for either indexed or continuous movement between a produce loading station and a core removal station. In such an arrangement, the movement of the core removal blade may be mechanically actuated by the relative movement between the conveyor and the chassis thereof, whereby the blade or individual segments thereof may be provided with operating arms which engage with runners attached to the chassis, the arms and/or runners being shaped such that on relative longitudinal movement as the conveyor is advanced there is a camming action between the arms and runners which causes pivotal movement of the blade or segments thereof. The arms are preferably provided with rollers to minimise friction between the arms and the runners.

The produce holding means of the produce supporting surface may comprise upstanding pins or blades on which the produce may be impaled to retain it against the movement of the cutter blade. Conveniently, where the blade is constituted by segments which are substantially upright at the open position, the blade segments themselves, or at least the upper or apex regions thereof, may constitute the holding means. However, the blade may be pivotally mounted by means of upstanding lugs and the lugs may additionally or alternatively constitute the holding means.

Conveniently, the produce supporting surface comprises a tray having an upturned rim to retain edible portions of the produce, following removal of the core, until discharge. Where the apparatus is mounted on a conveyor, the conveyor mechanism preferably comprises an endless belt or chain and the edible part of the produce is automatically discharged at a produce removal station, for example to a further conveyor or elevator or direct to a transportation container.

The height to which the blade extends above the support surface may be adjustable to control the depth of penetration and cut of the produce by the blade.

Two or more conveyors for apparatus according to the invention may be mounted side by side for multiple operation.

The invention is particularly suitable for removing the core from cauliflowers, retaining the edible portion of the curd either complete or as florets for discharge at the produce removal station. However, the invention may be used for removing the core from other vegetables of the brassica family or other vegetables in which the core to be removed is positioned relatively towards a peripheral area which can be offered, when in position on the produce support means, to the core removal blade.

The invention includes, in a further aspect, a method for removal of the core from an item of produce, the method comprising retaining the item on a support surface and causing a core removal blade to travel in a curved path from a retracted position through the said item, whereby the core is cut and separated therefrom.

Embodiments of the invention will now be described by way of example with reference to the accompanying drawings, of which:

Figures 1(a) and (b) are diagrammatic views from one side and in plan respectively, showing the general layout of a machine incorporating apparatus according to the invention;

Figures 2(a) and (b) show apparatus according to the invention with the cutting blade in the open and closed positions respectively; and

Figure 3 shows a perspective view of the apparatus of Figure 2.

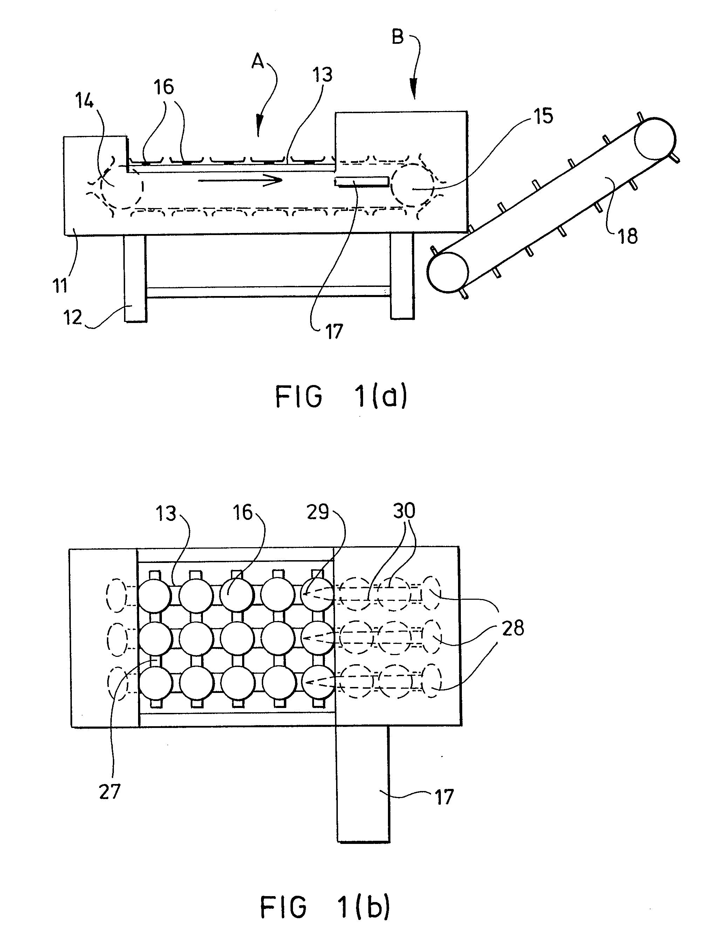

Referring first to Figure 1, a machine for removing the cores from cauliflowers is shown generally as a side elevation in Figure 1(a) in diagrammatic form and includes a chassis or frame 11 supported above the ground on legs 12. Endless conveyor chains 13 mounted side by side (see Figure 1(b)) are carried by end pulleys or sprockets 14, 15. The conveyor chains carry a series of core removal apparatus 16, only the support trays being shown for clarity. The upper surface of the conveyor advances in the direction of the arrow from a produce loading station A to a core removal or cutting station B. A transverse conveyor 17 collects the separated cores which fall away from the removal apparatus under gravity, and the edible portions are themselves ejected under gravity from the support trays as they are inverted on traversing the pulley 15. The edible portions fall on to an elevator 18 for carriage to a hopper or transportation container.

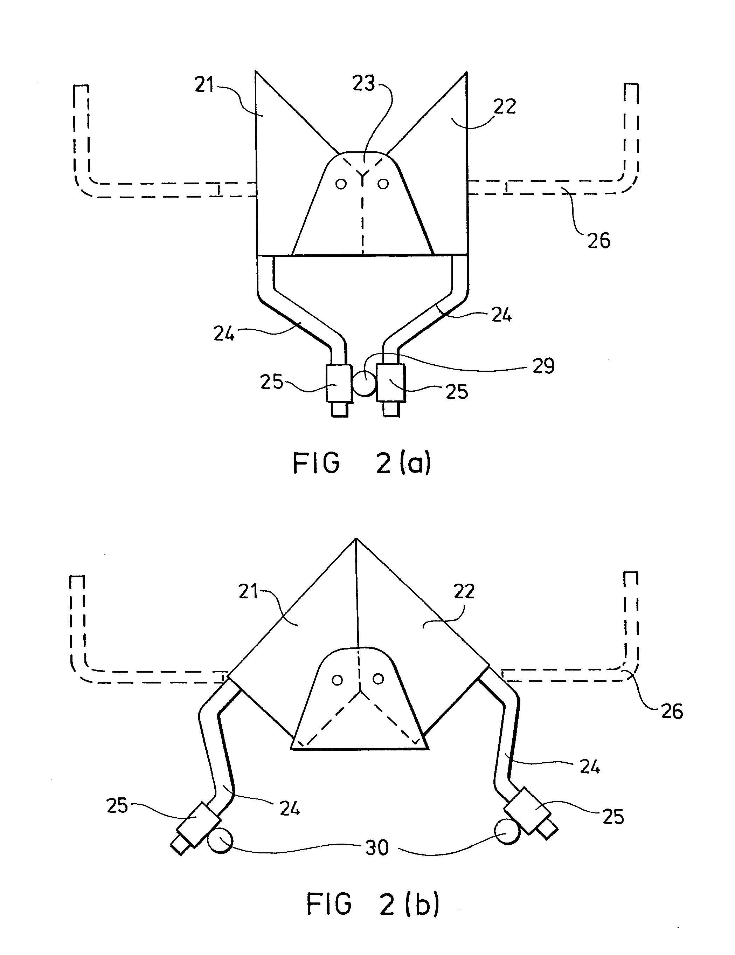

Referring now to Figure 2(a), the cutter mechanism of the machine of Figure 1 consists of a pair of opposed core removal blade segments 21, 22 each pivotally attached to a pair of upstanding lugs 23. Each blade segment is semicircular in a cross-section through a horizontal plane and has a cutting edge formed at an angle of 45°, whereby inward pivoting movement of each blade segment through an angle of 45° causes the cutting edges to meet, as shown in Figure 2(b).

Each blade segment is fitted with a dependent cranked arm 24 journalled on which is a nylon roller 25. The arms control the pivoting movement of the blade segments, whereby the arms on being moved apart cause the blade segments to move in the opposite fashion.

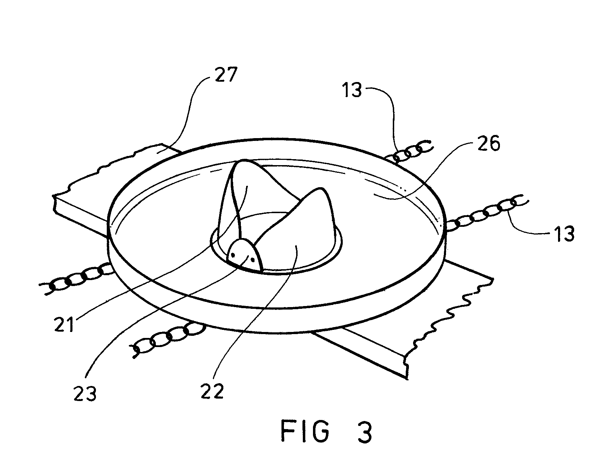

The cutter mechanism is mounted within a central aperture formed in a produce support tray 26, shown in dashed outline, whereby the blade segments expose the aperture from above, when in the position illustrated in Figure 2(a), and conceal the aperture when in the position illustrated in Figure 2(b). Three of such cutter mechanisms, each with its respective produce support tray, are mounted on a cross member 27 fixed to the endless conveyor chains (see Figure 3). A series of cross members are attached to the chains, such that there are three lanes 28 (see Figure 1(b)) of apparatus progressing continuously from the produce loading station to the core removal station and, mounted below each track so as to engage the rollers 25 and extending between the loading and core removal stations is a wishbone-like runner arrangement (shown generally in Figure 1(b)) the limbs of which are united upstream of the core removal station, as shown at 29 in Figure 2(a), and are bifurcated at the core removal station, as shown at 30 in Figure 2(b), thus spreading the arms 24 and closing the blade segments 21, 22 together as each cutter mechanism reaches the core removal station. Thereafter, the arms, which may be biassed towards each other, move towards one another until the runner is reached again on the following circuit.

In use, cauliflowers are loaded manually at the produce loading station by being impaled with their core regions on the upstanding blade segments and at the core removal station the blade segments close together to separate the core of each cauliflower and allow the core to fall under gravity to the transverse conveyor. The remaining edible florets are deposited on the elevator.

## Claims

1. Apparatus for the removal of the core from an item of produce, the apparatus comprising a support surface for the produce and at least one core removal blade, the support surface including means for holding the produce in position such that the core is exposed to the blade and the blade being movable from a retracted position such that portions of the cutting edge define a curved path to cut and separate the core from the produce.

2. Apparatus according to Claim 1, in which the movement of portions of the cutting edge is arcuate.

3. Apparatus according to Claim 2 or Claim 3, in which the support surface includes an aperture over which the produce is held and the core removal blade describes a curved path from the retracted position to cut and separate the core.

4. Apparatus according to any preceding claim, in which the blade is formed from two or more segments which are pivotally mounted for movement between an open position and a closed position at which the cutting edges of the blade segments lie adjacent each other.

5. Apparatus according to Claim 4, in which the blade is constituted by two scoop-like segments each substantially semi-circular in cross section and having a cutting edge formed obliquely, whereby each segment pivots inwardly during the cutting stroke from a substantially upright position to an angled position at which the cutting edges are adjacent one another.

6. Apparatus according to any preceding claim and mounted on a conveyor for movement between a produce loading station and a core removal station.

7. Apparatus according to Claim 6, in which the blade or segments thereof includes an operating arm which engages with shaped runners carried by the conveyor chassis, whereby movement of the conveyor causes pivotal movement of the blade or segments thereof by displacement of the operating arm or arms.

8. Apparatus according to any preceding claim, in which the produce-holding means is constituted by the upper or apex portion of the core removal blade in the retracted position.

9. Apparatus according to any of Claims 1 to 7, in which the produce-holding means comprises upstanding lugs which additionally serve as pivot mounting points for the core removal blade.

10. A method for removal of the core from an item of produce, the method comprising retaining the item on a support surface and causing a core removal blade to travel in a curved path from a retracted position through the said item, whereby the core is cut and separated therefrom.

FIG 1(a)

FIG 1(b)

FIG 2(a)

FIG 2(b)

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2227794 (B.F.PHILLIPS)<br>* page 1, left-hand column, line 39 - page 1, right-hand column, line 32; figures 1-6 *<br>---- | 1-7, 10 | A23N4/12<br>A23N15/00 |
| X | US-A-2197794 (M.EWALD)<br>* page 1, left-hand column, line 53 - page 1, right-hand column, line 41; figures 1-3 *<br>--- | 1-6, 10 | |
| A | US-A-1578355 (B.C.OLNEY)<br>* page 1, line 42 - page 2, line 10; figures 1-7 *<br>--- | 1-6, 10 | |
| A | EP-A-244387 (PROGRESSIVE FOOD ENGINEERING AB)<br>--- | | |
| A | FR-A-2410967 (ENTERPRISE S.E,R.M.A., A.POUDER)<br>--- | | |
| A | FR-A-2371887 (PRODUITS FINDUS S.A.)<br>----- | | |
| | | | **TECHNICAL FIELDS SEARCHED (Int. Cl.5 )**<br><br>A23N |

The present search report has been drawn up for all claims

| Place of search | Date of completion of the search | Examiner |
|---|---|---|
| THE HAGUE | 14 SEPTEMBER 1989 | NEHRDICH H.J |

EPO FORM 1503 03.82 (P0401)